## Europäisches Patentamt

## European Patent Office

## Office européen des brevets

(19)

(11) Veröffentlichungsnummer: **0 268 131**
**B1**

(12) **EUROPÄISCHE PATENTSCHRIFT**

(45) Veröffentlichungstag der Patentschrift:
11.04.90

(51) Int. Cl.⁴: **B60S 1/08**

(21) Anmeldenummer: 87116084.2

(22) Anmeldetag: 02.11.87

(54) **Wischanlage für Kraftfahrzeuge.**

(30) Priorität: 06.11.86 DE 3637921

(43) Veröffentlichungstag der Anmeldung:
25.05.88 Patentblatt 88/21

(45) Bekanntmachung des Hinweises auf die Patenterteilung:
11.04.90 Patentblatt 90/15

(84) Benannte Vertragsstaaten:
AT BE CH ES FR GB IT LI NL SE

(56) Entgegenhaltungen:
DE-A- 1 911 655
DE-A- 2 917 324

PATENT ABSTRACTS OF JAPAN, Band 8,
Nr. 12 (M-269)[1449], 19. Januar 1984; & JP - A
- 58 174 046 (DAIHATSU) 13.10.1983

(73) Patentinhaber: SWF Auto-Electric GmbH, Stuttgarter
Strasse 119 Postfach 135,
D-7120 Bietigheim-Bissingen(DE)

(72) Erfinder: Schmid, Eckhard, Heilbronner Strasse 62,
D-7129 Brackenheim(DE)
Erfinder: Scholl, Wolfgang, Gartenstrasse 16,
D-7121 Gemmrigheim(DE)

**Beschreibung**

Die Erfindung bezieht sich auf eine Wischanlage gemäß den Merkmalen des Oberbegriffs des Anspruchs 1.

In der DE-A 29 17 324 ist bereits eine Schaltanordnung für eine Wischanlage beschrieben, bei der sich der Wischer während des normalen Wischbetriebes zwischen zwei Umkehrstellungen bewegt, beim Abschalten aber in eine sogenannte versenkte Parkstellung einläuft. Bei dieser bekannten Schaltanordnung wird die Drehrichtung des Elektromotors über einen Umpolschalter immer dann geändert, wenn der Wischer im normalen Wischbetrieb die Umkehrstellungen am Rand des Wischfeldes erreicht. Dabei ist einer der Schaltpunkte des Umpolschalters in Abhängigkeit vom Betriebsschalter veränderbar, so daß bei ausgeschaltetem Betriebsschalter der Wischermotor in eine versenkte Parkstellung einläuft, worauf der Elektromotor abgeschaltet wird.

Bei einer ersten in dieser Vorveröffentlichung gezeigten Ausführungsform sind dem Elektromotor drei Positionsschalter zugeordnet, die in der versenkten Parkstellung sowie in den beiden Umkehrstellungen betätigt werden. Die Schaltsignale dieser Positionsschalter werden in einer Schaltstufe ausgewertet und zur Ansteuerung eines relaisbetätigten Umpolschalters verwendet. Bei einer zweiten aus dieser Vorveröffentlichung bekannten Ausführung sind die Positionsschalter durch einen Drehzahlgeber ersetzt und die Impulse dieses Drehzahlgebers werden in Zählern und Vergleichsstufen ausgewertet.

Derartige Wischanlagen mit einer sogenannten versenkten Parkstellung der Scheibenwischer in einem Schacht zwischen der Motorhaube und der Windschutzscheibe haben in stilistischer, strömungstechnischer und vor allem auch sicherheitstechnischer Hinsicht Vorteile. Die Scheibenwischer sind nämlich während der weitaus überwiegenden Betriebszeit des Fahrzeuges aus dem Sichtfeld des Fahrers entfernt in einer Stellung, die bei Unfällen nicht zu Verletzungen bei den beteiligten Personen führen kann. Die Sicherheit wird auch deshalb verbessert, weil in dieser versenkten Parkstellung mit einfachen Mitteln eine Entlastung des Scheibenwischers und damit des Wischgummis möglich ist, so daß Ablageverformungen des Wischgummis vermieden werden, die das Wischbild nachteilig beeinträchtigen könnten.

Allerdings haben derartige Wischanlagen auch den Nachteil, daß im Winter eine Blockierung der Scheibenwischer nicht völlig ausgeschlossen ist, weil sich in dem Schacht zwischen der Motorhaube und der Windschutzscheibe leicht Eis und Schnee festsetzt. Dadurch wird natürlich die Funktionsfähigkeit der Wischanlage wesentlich beeinträchtigt, zumal in Einzelfällen auch der elektrische Wischermotor dauerhaft beschädigt wird, wenn der Wischer nach dem Einschalten zwar aus der Parkstellung herausläuft, aber kurz danach in einer Stellung blockiert, in der er auch bei abgeschaltetem Betriebsschalter an Spannung liegt.

Der vorliegenden Erfindung liegt also die Aufgabe zugrunde, die Betriebssicherheit derartiger Wischanlagen mit einfachsten Mitteln zu erhöhen.

Diese Aufgabe wird erfindungsgemäß mit den kennzeichnenden Merkmalen des Anspruchs 1 gelöst.

Der vorliegenden Erfindung liegt also die Erkenntnis zugrunde, daß man ein Blockieren des Wischers weitgehend vermeiden kann, wenn man im Winter dafür sorgt, daß dieser Wischer nicht in den Schacht zwischen Motorhaube und Windschutzscheibe einlaufen kann. Dies kann in einfachster Weise dadurch realisiert werden, daß man die Parkstellung temperaturabhängig verändert. Oberhalb einer bestimmten Temperaturschwelle läuft der Wischer wie bisher in seine versenkte Parkstellung. Bei Temperaturen unterhalb einer bestimmten Temperaturschwelle wird man jedoch die Parkstellung so verändern, daß der Wischer außerhalb dieses Schachtes stillgesetzt wird. Dabei wird die Parkstellung im Winterbetrieb, also bei tiefen Temperaturen vorzugsweise einer Umkehrstellung im normalen Wischbetrieb entsprechen, weil dies kostengünstig deshalb realisierbar ist, weil üblicherweise im Wischermotor schon entsprechende Schaltkontakte zur Auslösung entsprechender Schaltsignale vorhanden sind. Es sind jedoch auch Lösungen denkbar, bei denen im Winterbetrieb der Wischer zwischen der im Normalbetrieb üblichen Umkehrstellung und der bei höheren Temperaturen normalen versenkten Parklage abgelegt wird.

Gemäß einer vorteilhaften Weiterbildung der Erfindung kann die Schaltung zur Steuerung der Wischanlage so ausgelegt werden, daß der Wischer temperaturabhängig zwischen seiner Parkstellung im Winterbetrieb und seiner Parkstellung im Sommerbetrieb selbsttätig hin- und herpendelt. Der in der versenkten Parkstellung im Schacht abgelegte Wischer soll also selbsttätig in seine andere Parkstellung, beispielsweise die Umkehrstellung herausfahren, wenn die Temperatur unter die genannte Temperaturschwelle abfällt. Entsprechendes könnte auch umgekehrt gelten, das heißt der bei tiefen Temperaturen außerhalb des Schachtes abgelegte Wischer fährt selbsttätig in den Schacht hinein, sobald die Temperatur auf Werte oberhalb der Temperaturschwelle ansteigt.

Außerdem könnte die Schaltanordnung zur Steuerung der Wischanlage so erweitert werden, daß mittels eines manuell betätigbaren Schalters willkürlich eine der möglichen Parkstellungen vorwählbar ist. Dadurch soll es dem Fahrer ermöglicht werden, den Wischer auch bei tiefen Temperaturen in die versenkte Parkstellung im Schachtbereich abzulegen, denn bei tiefen Temperaturen aber trockener Witterung ist ein Einfrieren nicht zu befürchten.

Die Erfindung wird nachstehend anhand des in der Zeichnung dargestellten Ausführungsbeispieles näher erläutert. Es zeigen:

Fig. 1 ein Prinzipschaltbild für eine Wischanlage mit versenkter Parkstellung in der bisher üblichen Ausführung und

Fig. 2 ein Prinzipschaltbild des Schaltungszusatzes zur Realisierung der Erfindung bei der Schaltung nach Fig. 1.

Ein Elektromotor 10 wird über einen Umpolschalter 1 aus einer Spannungsquelle 12 gespeist, deren positiver Pol mit 15 und deren negativer Pol bzw. Masseanschluß mit 13 bezeichnet ist. Der Elektromotor 10 ist direkt an die beiden beweglichen Kontaktbrücken 16 und 17 des Umpolschalters angeschlossen. Die Festkontakte 18 und 20 sind zusammengeschaltet und liegen an Masse 13. Die beiden anderen Festkontakte 19 und 21 sind ebenfalls zusammengeschaltet und an den Ausgang 22 eines Hauptspeichers 23 angeschlossen. Die beweglichen Kontaktbrücken 16 und 17 werden gemeinsam über ein Relais 24 geschaltet. Mit 25 ist ein Betriebsschalter bezeichnet, der einen Schließerkontakt 26 und einen Umschaltekontakt 27 aufweist, die gemeinsam betätigt werden.

Vom Elektromotor 10 wird ein insgesamt mit 30 bezeichneter Positionsschalter betätigt, der durch eine Schaltscheibe realisiert sein kann. Dabei wirkt ein Kontaktsegment 31, welches dauernd an Masse 13 liegt, in den Umkehrstellungen des Wischers während des normalen Wischbetriebes mit den Festkontakten 33 bzw. 32 zusammen. In der Zeichnung ist dieses Kontaktsegment 31 in der Lage dargestellt, die es in der sogenannten versenkten Parkstellung einnimmt, wo es am Festkontakt 34 anliegt. Dreht sich der Elektromotor 10 um einen Drehwinkel $\ell$, läuft das Kontaktsegment 31 auf den Festkontakt 33 auf und löst ein Schaltsignal aus. Dies ist der Fall, wenn der Wischer während des normalen Wischbetriebs die der versenkten Parkstellung benachbarte erste Umkehrstellung einnimmt. Die andere Umkehrstellung ist dann erreicht, wenn das Kontaktsegment 31 auf dem Festkontakt 32 aufliegt. In dieser Schaltstellung des Kontaktsegmentes 31 wird ein zweites Schaltsignal ausgelöst.

Zu der Schaltung gehört weiterhin ein Umpolspeicher 40 mit einem Setzeingang 41 und einem Rücksetzeingang 42, der das Relais 24 steuert. Der auf negative Potentialflanken ansprechende Setzeingang 41 ist mit dem Festkontakt 32 verbunden. Der Rücksetzeingang 42 ist über den Umschalter 27 wahlweise mit dem Festkontakt 33 oder dem Festkontakt 34 des Positionsschalters 30 verbindbar.

Ein statischer Setzeingang 28 des Hauptspeichers 23 ist mit dem Schließerkontakt 26 des Betriebsschalters verbunden. Der dynamische Rücksetzeingang 29 des Hauptspeichers 23 ist an dem Festkontakt 34 des Positionsschalters 30 angeschlossen.

Bei der folgenden Beschreibung der Funktionsweise der Schaltanordnung wird davon ausgegangen, daß die beiden Speicher 23 und 40 zurückgesetzt sind und deshalb das Relais nicht erregt ist. Die einzelnen Kontaktbrücken nehmen die in der Zeichnung dargestellte Schaltstellung ein. Der Wischer befindet sich in der versenkten Parkstellung.

Wird nun der Betriebsschalter 25 betätigt, wird positives Potential über den Schließerkontakt 26 dem Setzeingang 28 des Hauptspeichers 23 zugeführt. Am Ausgang 22 dieses Hauptspeichers 23 ist dann positives Potential meßbar, das dem Elektromotor gegebenenfalls über eine nicht näher dargestellte Leistungsstufe etwa in Form eines Relais und über die Umschaltkontaktbrücke 16 zugeführt wird. Der Elektromotor 10 liegt damit an Spannung, da die andere Umschaltkontaktbrücke 17 an Masse liegt. Zugleich mit dem Umschalten des Schließerkontaktes 26 wurde auch der Umschaltekontakt 27 in die gestrichelt dargestellte Lage umgestellt. Dies hat jedoch auf den Schaltzustand des Umpolspeichers 40 keinen Einfluß.

Der Elektromotor dreht sich nun entgegen dem Uhrzeigersinn, so daß schließlich nach einem Winkel $\ell$ das Kontaktsegment 31 auf den Festkontakt 33 aufläuft und damit ein erstes Schaltsignal auslöst. Dieses Schaltsignal wird über den Umschaltekontakt zwar auf den Rücksetzeingang 42 des Umpolspeichers 40 aufgeschaltet, hat aber keinen Einfluß, da dieser Umpolspeicher ohnehin zurückgesetzt war. Die Drehrichtung des Elektromotors bleibt also unverändert, bis schließlich nach einem Drehwinkel $\alpha$ das Kontaktsegment 31 auf den Festkontakt 32 aufläuft. Damit wird ein zweites Schaltsignal ausgelöst, das dem Setzeingang 41 des Umpolspeichers 40 zugeführt wird. Der Umpolspeicher 40 wird damit gesetzt und das Relais 24 spricht an und verstellt die Kontaktbrücken 16 und 17 in die gestrichelt dargestellte Lage. Damit ist die dem Elektromotor 10 zugeführte Spannung umgepolt und der Motor dreht sich nun in der anderen Drehrichtung. Läuft nun das Kontaktsegment 31 wieder auf den Festkontakt 33 auf, wird erneut ein erstes Schaltsignal ausgelöst, welches nun den Umpolspeicher 40 zurücksetzt. Damit wird das Relais 24 entregt und die Drehrichtung des Motors erneut geändert. Dieser Vorgang wiederholt sich fortlaufend, solange der Betriebsschalter eingeschaltet bleibt. Die Wischer bewegen sich innerhalb des durch den Winkel $\alpha$ vorgegebenen Wischfeldes zwischen den beiden Umkehrstellungen, wobei jeweils beim Auflaufen des Kontaktsegmentes 31 auf die Festkontakte 32 bzw. 33 Schaltsignale ausgelöst werden, über die der Umpolspeicher 40 gesetzt bzw. zurückgesetzt wird.

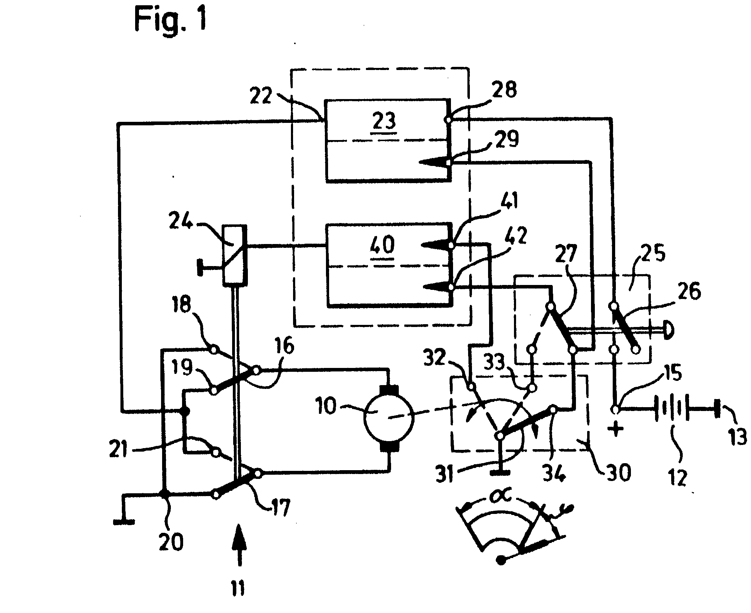

Wird nun die Wischanlage abgeschaltet und damit der Umschaltkontakt 27 und der Schließerkontakt 26 wieder in die in Figur 1 dargestellte Lage gebracht, ändert sich zunächst an dem Schaltzustand der Speicher 23 bzw. 40 nichts. Der Speicher 23 bleibt also gesetzt, so daß der Elektromotor sich in der momentanen Drehrichtung weiterdreht. Läuft nun das Kontaktsegment 31 auf den Festkontakt 33 auf, wird der Umpolspeicher 40 nicht zurückgesetzt. Der Elektromotor behält also seine Drehrichtung bei. Damit werden die Wischer aus dem normalen Wischfeld herausbewegt. Läuft das Kontaktsegment 31 nun auf den Festkontakt 34 auf, wird das erste Schaltsignal ausgelöst und über den Umschaltkontakt 27 auf den Rücksetzeingang 42 des Umpolschalters 40 aufgeschaltet. Damit wird das Relais 24 entregt. Zugleich wird aber auch der Hauptspeicher 23 zurückgesetzt, denn dieses Schaltsignal wird auch dem Rücksetzeingang 29 zugeführt. Der Wischermotor ist abgeschaltet und die Wischer befinden sich in der versenkten Parkstellung. Bei dieser Ausführung wird also mit der Umschaltung des Betriebsschalters 25 der Schaltpunkt des Umpolschalters 11 verändert.

Bei eingeschaltetem Betriebsschalter schaltet der Umpolschalter, wer... das Kontaktsegment auf dem Festkontakt 33 liegt, bei ausgeschaltetem Betriebsschalter wird das Relais 24 erst entregt, wenn das Kontaktsegment 31 auf den um einen Drehwinkel versetzt angeordneten Festkontakt 34 aufläuft. In der Ausschaltstellung des Betriebsschalter 25 ist also der mögliche Drehwinkel des Elektromotors um den Winkel $l$ vergrößert.

Die Schaltung nach Fig. 1 entspricht dem Stand der Technik, bei dem beim Abschalten der Wischanlage der Wischer grundsätzlich in die sogenannte versenkte Parkstellung gefahren wird, was die eingangs geschilderten Nachteile hat.

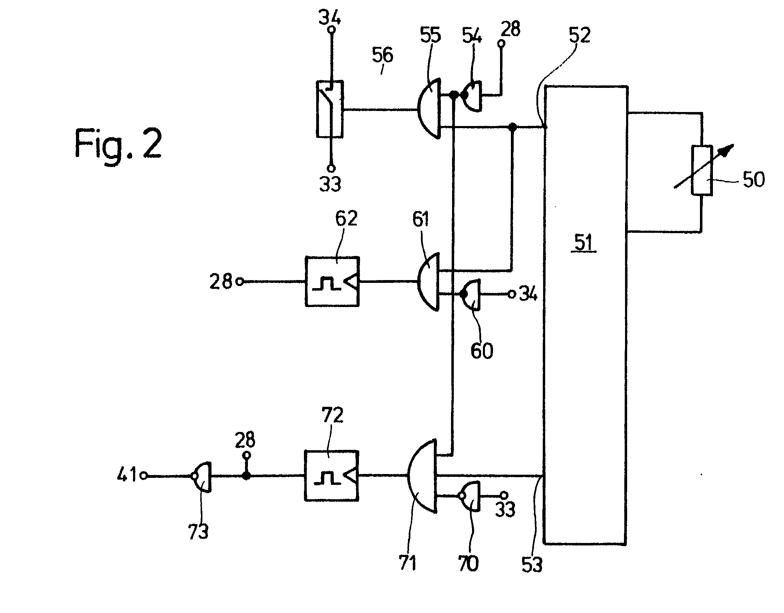

In Fig. 2 ist nun ein Schaltungszusatz gezeigt, mit dem die Schaltung nach Fig. 1 so weitergebildet werden kann, daß die Parkstellung des Wischers temperaturabhängig veränderbar ist. Zu diesem Schaltungszusatz nach Fig. 2 gehört zunächst ein temperaturabhängiges Schaltelement, z.B. ein temperaturabhängiger Widerstand 50, der bei manchen Fahrzeugen zur Messung der Außentemperatur ohnehin vorhanden ist. Das Signal dieses temperaturabhängigen Schaltelementes 50 wird einem Schwellwertschalter 51 mit zwei Ausgängen 52 und 53 zugeführt. Dieser Schwellwertschalter 51 arbeitet in der Weise, daß am Ausgang 52 positives Potential anliegt, wenn die Temperatur unterhalb einer vorgegebenen Temperatur von beispielsweise + 5° Celsius liegt. Bei höheren Temperaturen liegt dagegen am Ausgang 53 positives Potential, während am Ausgang 52 Massepotential meßbar ist. Zu der Schaltanordnung nach Fig. 2 gehört ein Inverter 54, dessen Eingang mit dem Setzeingang 28 des Hauptspeichers 23 verbunden ist. Am Ausgang dieses Inverters 54 ist folglich immer dann positives Potential meßbar, wenn der Betriebsschalter 25 sich in der in Fig. 1 gezeigten Ruhestellung befindet. Dann wird bei tiefen Temperaturen über das Signal am Ausgang 52 das UND-Gatter 55 durchgesteuert und ein Schalter 56 geschlossen, der die Schaltungspunkte 33 und 34 miteinander verbindet.

Aus Fig. 1 geht hervor, daß der Schaltungspunkt 33 über das Kontaktsegment 31 dann an Masse liegt, wenn sich der Wischer in der einen Umkehrstellung befindet. Ist also der Betriebsschalter 25 ausgeschaltet und liegt die Außentemperatur unterhalb eines bestimmten Schwellwertes, wird über den Schalter 56 ein leitende Verbindung zwischen den beiden Festkontakten 33 und 34 hergestellt. Wenn sich der Wischer in der Umkehrstellung befindet, wird folglich ein Schaltvorgang ausgelöst, der dem Schaltvorgang entspricht, der bei der bisher bekannten Schaltung erst ausgelöst wird, wenn sich der Wischer in der versenkten Parkstellung befindet. Folglich wird also der Wischer bei tiefen Temperaturen bereits in der Umkehrstellung stillgesetzt. Bei geöffnetem Schalter besteht diese Verbindung zwischen den Festkontakten 33 und 34 nicht, so daß sich dann bei höheren Temperaturen die übliche Betriebsweise ergibt, bei der der Wischer in der versenkten Parkstellung stillgesetzt wird.

Zu der Schaltung nach Fig. 2 gehört außerdem ein Schaltungsteil mit dem Inverter 60, dem UND-Gatter 61 und einem Impulsgeber 62, der dazu dient, einen in der versenkten Parkstellung stillgesetzten Wischer bei tiefen Temperaturen selbsttätig in die Umkehrstellung zurückzuführen. Der Inverter 60 ist an den Festkontakt 34 angeschlossen, der nur dann an Masse liegt, wenn sich der Wischer in der versenkten Parkstellung befindet. Das UND-Gatter 61 kann daher das Schaltsignal am Ausgang 52 des Schwellwertschalters 51 nur dann zur Triggerung des Impulsgebers 62 weiterleiten, wenn der Wischer seine versenkte Parkstellung einnimmt. Ist dies der Fall und ändert sich die Temperatur von hohen Werten auf einen tiefen Wert, wird folglich der Impulsgeber 62 getriggert und damit dem Setzeingang 28 ein Signal zugeführt, das vergleichbar ist mit einem kurzen Einschaltimpuls über den Betriebsschalter 25. Der Wischer läuft folglich aus seiner versenkten Parkstellung an, wird jedoch sofort wieder abgeschaltet, wenn der Schaltkontakt 31 auf den Festkontakt 33 aufläuft, weil bei tiefen Temperaturen eine leitende Verbindung zwischen den Festkontakten 33 und 34 hergestellt ist und somit der Rücksetzeingang 29 des Hauptspeichers angesteuert wird.

Zu der Schaltung nach Fig. 2 gehört ein weiterer Schaltungsteil, der dazu dient, den bei kalten Temperaturen in einer Umkehrlage abgelegten Wischer bei steigender Temperatur wieder in die versenkte Parklage zurückzuführen. Zu diesem Schaltungsteil gehört ein Inverter 70, ein UND-Gatter 71, ein Impulsgeber 72 und ein weiterer Inverter 73. Der Eingang des Inverters 70 ist mit dem Festkontakt 33 des Positionsschalters 30 verbunden, so daß an einem Eingang des UND-Gatters 70 nur dann positives Potential anliegt, wenn sich der Wischer in der Umkehrlage befindet. Ein weiterer Eingang dieses UND-Gatters ist mit dem Ausgang des Inverters 54 verbunden, der positives Potential nur bei ausgeschaltetem Betriebsschalter 25 führt. Ein dritter eingang dieses UND-Gatters 70 ist mit dem Ausgang 53 des Schwellwertschalters 51 verbunden, der positives Potential nur dann führt, wenn die Temperatur oberhalb der Temperaturschwelle liegt. In diesem Fall, also bei ausgeschaltetem Betriebsschalter und bei einem in der Umkehrlage geparkten Wischer und bei hoher Außentemperatur wird also der Impulsgeber 72 getriggert und damit wiederum dem Setzeingang 28 des Hauptspeichers 23 positives Potential zugeführt. Zugleich wird über den Inverter 53 aber auch der Setzeingang 41 des Umpolspeichers 40 getriggert, so daß das Relais erregt und damit der Elektromotor 10 mit umgepolter Spannung angesteuert wird. Folglich wird der Wischer aus der Umkehrlage direkt in die versenkte Parkstellung zurückgestellt, und dort abgeschaltet, weil bei hohen Außentemperaturen der Schalter 56 geöffnet ist.

Insgesamt ist also festzustellen, daß bei der erfindungsgemäßen Ausführung die Parkstellung des Wischers temperaturabhängig veränderbar ist. Bei dem konkreten Ausführungsbeispiel wird dabei bei Temperaturen unterhalb einer bestimmter Temperaturschwelle der Wischer in der Umkehrstellung stillgesetzt. Außerdem ist dafür gesorgt, daß der Wischer selbsttätig in die bei der jeweiligen Außentemperatur vorgesehene Parkstellung fährt, ohne daß dazu Schaltvorgänge vom Fahrer ausgelöst werden müssen.

Die vorliegende Erfindung wurde beschrieben anhand eines Ausführungsbeispieles, bei dem ein drehrichtungsumkehrbarer Wischermotor vorausgesetzt wird. Selbstverständlich kann der Grundgedanke der Erfindung auch dann realisiert werden, wenn der Wischermotor in gleicher Drehrichtung umläuft und die Pendelbewegung des Wischers über ein Kurbelgetriebe erzeugt wird. Außerdem wurde die Erfindung anhand eines Ausführungsbeispieles einer Wischanlage beschrieben, bei der eine sogenannte versenkte Parkstellung vorausgesetzt wird. Der Grundgedanke der Erfindung, nämlich eine temperaturabhängige Veränderung der Parkstellung könnte auch bei Wischanlagen eingesetzt werden, bei dem der Wischer immer zwischen zwei Umkehrlagen hin- und herpendelt und dieses Wischfeld auch während des Parkstellungslaufes nicht verläßt. Es sind nämlich durchaus Anlagen denkbar, bei denen der Wischer auch während des normalen Wischbetriebes kurzzeitig in den Schacht zwischen Motorhaube und Windschutzscheibe eintaucht.

Die Erfindung wurde anhand eines Ausführungsbeispieles erläutert, bei dem zwei unterschiedliche Parkstellungen möglich sind. Die Erfindung läßt sich natürlich auch in der Weise erweitern, daß die Parkstellung kontinuierlich in Abhängigkeit von der Temperatur veränderbar ist.

## Patentansprüche

1. Wischanlage für Kraftfahrzeuge mit wenigstens einem Wischer, der im normalen Wischbetrieb zwischen zwei Umkehrstellungen innerhalb eines Wischfeldes pendelt und nach dem Ausschalten der Wischanlage in einer Parkstellung vorzugsweise außerhalb des Wischfeldes stillsetzbar ist, dadurch gekennzeichnet, daß die Parkstellung des Wischers temperaturabhängig veränderbar ist.

2. Wischanlage nach Anspruch 1, dadurch gekennzeichnet, daß bei Temperaturen unterhalb einer bestimmten Temperaturschwelle der Wischer in einer der Umkehrstellung entsprechenden Stellung geparkt wird, bei Temperaturen oberhalb eine bestimmten Temperaturschwelle aber in der sogenannten versenkten Parkstellung abgelegt wird.

3. Wischanlage nach Anspruch 1 oder 2, dadurch gekennzeichnet, daß der Wischer temperaturabhängig zwischen seiner Parkstellung bei tiefen Temperaturen und seiner Parkstellung bei hohen Temperaturen selbsttätig hin-und herpendelt.

4. Wischanlage nach wenigstens einem der vorhergehenden Ansprüche, dadurch gekennzeichnet, daß über einen willkürlich betätigbaren Schalter eine der möglichen Parkstellungen temperaturunabhängig vorwählbar ist.

## Claims

1. A wiper system for motor vehicles with at least one wiper which during normal wiper operation is moving to and fro within a wiping area between two reversing positions and which after the wiper system being switched off can be stopped in a parking position, preferably outside the wiping area, characterized in that the parking position of the wiper can be changed in dependence of the temperature.

2. A wiper system according to claim 1, characterized in that in low temperatures below a certain threshold of temperature the wiper is parked in a position corresponding to a reversing position that, however, in temperatures above a certain threshold temperature it is deposited in a so-called depressed parking position.

3. A wiper system according to claim 1 or 2, characterized in that depending on the temperature the wiper is automatically moving to and fro between its parking position in low temperatures and its parking position in high temperatures.

4. A wiper system according to at least one of the preceding claims characterized in that via an arbitrarily actuable switch one of the possible parking positions can be chosen beforehand regardless of the temperature.

## Revendications

1. Installation d'essuie-glace pour véhicules automobiles comportant au moins un essuie-glace, qui lors du fonctionnement normal d'essuyage, oscille entre deux positions d'inversion de marche à l'intérieur d'une aire d'essuyage et, après l'arrêt de l'installation d'essuie-glace, peut être arrêté dans une position de rangement de préférence à l'extérieur de l'aire d'essuyage, caractérisée en ce que la position de rangement de l'essuie-glace est variable en fonction de la température.

2. Installation d'essuie-glace selon la revendication 1, caractérisée en ce que dans le cas de températures inférieures à un seuil déterminé de température, l'essuie-glace est arrêté dans une position de rangement correspondant à la position d'inversion de marche, pour des températures inférieures à un seuil déterminé de température, mais est arrêté dans la position de rangement dite en renfoncement, dans le cas de températures supérieures à un seuil déterminé de température.

3. Installation d'essuie-glace selon la revendication 1 ou 2, caractérisée en ce que l'essuie-glace oscille automatiquement en va-et-vient entre sa position de rangement aux basses températures et sa position de rangement aux températures élevées.

4. Installation d'essuie-glace selon au moins l'une des revendications précédentes, caractérisée en ce que l'une des positions possibles de rangement peut être présélectionnée, indépendamment de la température, au moyen d'un commutateur pouvant être actionné à volonté.

Fig. 1

Fig. 2

EP 0 268 131 B1